# EUROPÄISCHE PATENTANMELDUNG

(11) **EP 0 953 779 A2**
(43) Veröffentlichungstag der Anmeldung: **03.11.1999**
(21) Anmeldenummer: 99105357.0
(22) Anmeldetag: 16.03.1999
(51) Int. Cl.: F16C 9/02

(54) **Verfahren zur Ausbildung einer geteilten Lageranordnung in einem gegossenen Maschinengehäuse, insbesondere Gleitlager für Hubkolbenmaschinen**

(30) Priorität: 29.04.1998 DE 19819082
(71) Anmelder: Bayerische Motoren Werke Aktiengesellschaft, 80788 München (DE)
(72) Erfinder: Wimmer, Rudolf, 4431 Haidershofen (AT); Malischew, Franz, 4400 Steyr (AT); Keber, Andreas, 4400 Steyr (AT)

(57) **Zusammenfassung**

Für ein Verfahren zur Ausbildung einer geteilten Lageranordnung in einem gegossenen Maschinengehäuse, insbesondere Gleitlager für Hubkolbenmaschinen, mit korrespondierenden Profilen in Spannflächen von Lagerstuhl und Lagerdeckel aus unterschiedlich harten Werkstoffen wird zur Vereinfachung der Profilausbildung vorgeschlagen, daß ein in der Gießform für das Maschinengehäuse aus einem Leichtmetall jedem gehäuseseitigen Lagerstuhl zugeordneter Lagerdeckel aus einem Eisenwerkstoff mit seiner profilierten Spannfläche als Gießform zur Ausbildung des korrespondierenden Profils im Lagerstuhl dient.

## Beschreibung

Die Erfindung bezieht sich nach dem Oberbegriff des Patentanspruches 1 auf ein Verfahren zur Ausbildung einer geteilten Lageranordnung in einem gegossenen Maschinengehäuse, insbesondere Gleitlager für Hubkolbenmaschinen, wobei in den Spannflächen von Lagerstuhl und Lagerdeckel aus unterschiedlich harten Werkstoffen korrespondierende Profile gesondert ausgebildet werden.

Für die lagegenaue Zuordnung von Lagerdeckel und Lagerstuhl ist es beispielsweise bekannt, den Lagerdeckel mittels Paßstifte, Paßhülsen oder Paßbunden an den Lagerdeckelschrauben relativ zum Lagerstuhl lagegenau zu fixieren, wobei der Lagerdeckel bei hohen Querbelastungen zusätzlich im Maschinengehäuse bzw. am Lagerstuhl eingepaßt sein kann. Zur Aufnahme hoher Querbelastungen ist es weiter bekannt, die beiden Spannflächen von Lagerstuhl und Lagerdeckel mit korrespondierenden Profilen zu versehen. Eine bevorzugte Ausgestaltung dieser Profile als Zahnprofile ist unter anderem aus dem gattungsbildenden deutschen Gebrauchsmuster DE-U 68 12 460 bekannt.

Nachteilig hierbei ist die gesonderte, spanabhebende Herstellung jedes Profils an Lagerdeckel und Lagerstuhl.

Der Erfindung liegt die Aufgabe zugrunde, ein vereinfachtes Herstell-Verfahren für korrespondierende Profile an Lagerdeckel und Lagerstuhl aufzuzeigen.

Diese Aufgabe ist mit dem Patentanspruch 1 dadurch gelöst, daß in der Gießform für das Maschinengehäuse aus einem Leichtmetall jedem gehäuseseitigen Lagerstuhl ein aus einem Eisenwerkstoff gebildeter Lagerdeckel mit einer profilierten Spannfläche derart zugeordnet wird, daß in der Spannfläche jedes Lagerstuhls das korrespondierende Profil zum jeweiligen, vom im wesentlichen erkalteten Maschinengehäuse entfernbaren Lagerdeckel erzeugt wird.

Der Vorteil der Erfindung ist, daß lediglich eines der Profile, nämlich das am Lagerdeckel durch spanabhebende oder sonstige Herstellweise erzeugt ist und dieses Profil durch die Anordnung des Deckels mit diesem Profil in der Gießform zur Ausbildung des korrespondierenden Profils im Lagerstuhl des Maschinengehäuses dient. Damit entfällt in vorteilhafter Weise eine gesonderte Ausbildung des Profils in einer Spannfläche des Lagerstuhls bzw. in den Spannflächen der Lagerstühle eines Gehäuse mit mehreren Gleitlagerstellen.

In Ausgestaltung des erfindungsgemäßen Verfahrens kann zum leichteren Trennen des Lagerdeckels vom Lagerstuhl das Profil des Lagerdeckels mit einer dünnen Schlichteschicht versehen werden.

Das Trennen des profilgebenden Lagerdeckels kann weiter durch eine vorteilhafte Werkstoffwahl sichergestellt sein, insbesondere dadurch, daß der Lagerdeckel aus einem Graugußwerkstoff, vorzugsweise GGG, gebildet wird mit einer Verzahnung als Profil in der Spannfläche.

Die mit dem erfindungsgemäßen Verfahren erzielte Profilausbildung im Lagerstuhl gilt sowohl für einzelne Lagerdeckel als auch für solche in einem Lagerrahmen vorgesehene Lagerdeckel, vorzugsweise für ein Maschinengehäuse eines V-Motors.

Die Erfindung ist im folgenden beschrieben.

Bei einem Verfahren zur Ausbildung einer geteilten Lageranordnung in einem gegossenen Maschinengehäuse, insbesondere Gleitlager für Hubkolben-Brennkraftmaschinen, werden in den Spannflächen von Lagerstuhl und Lagerdeckel aus unterschiedlich harten Werkstoffen korrespondierende Profile gesondert ausgebildet.

Zur Erzielung eines geringen Herstellaufwandes für derartige Profile wird erfindungsgemäß vorgeschlagen, daß in der Gießform für das Maschinengehäuse aus einem Leichtmetall jedem gehäuseseitigen Lagerstuhl ein aus einem Eisenwerkstoff gebildeter Lagerdeckel mit einer profilierten Spannfläche derart zugeordnet wird, daß in der Spannfläche jedes Lagerstuhls das korrespondierende Profil zum jeweiligen, vom im wesentlichen erkalteten Maschinengehäuse entfernbaren Lagerdeckel erzeugt wird.

Durch die erfindungsgemäße Einbettung eines Lagerdeckels mit profilierter Spannfläche in die Gießform eines Maschinengehäuses dient dieser Lagerdeckel mit seinem Profil in den Spannflächen als formgebende Gießform zur Ausbildung des korrespondierenden Profils im jeweiligen Lagerstuhl, wodurch sich beispielsweise eine spanabhebende Erzeugung des korrespondierenden Profils im Lagerstuhl erübrigt.

Zum beschädigungsfreien und somit leichten Trennen des Lagerdeckels vom Lagerstuhl bei im wesentlichen erkaltetem Maschinengehäuse kann nach einem weiteren Vorschlag das Profil des Lagerdeckels mit einer dünnen Schlichteschicht versehen werden. Damit sind metallische Verbindung aus dem Gießvorgang der unterschiedlichen Werkstoffe von Lagerstuhl und Lagerdeckel sicher vermieden.

Ein leichtes und beschädigungsfreies Trennen des Lagerdeckels vom Lagerstuhl kann auch durch eine entsprechende Werkstoffwahl erzielt werden, vorzugsweise bei einem aus Leichtmetall bzw. einer Aluminium-Legierung gebildeten Maschinengehäuse dadurch, daß der mit dem Lagerstuhl verschraubbare Lagerdeckel aus einem Graugußwerkstoff, vorzugsweise GGG, gebildet wird mit einer Verzahnung als Profil in der Spannfläche. Dieses Verzahnungs-Profil kann bei Zahnhöhen ab etwas 1,5 mm sowohl durch Gießen als auch durch spanabhebende Bearbeitung, gegebenenfalls auch durch Erodieren hergestellt werden.

Die Kombination der Werkstoffe einer Alu-Legierung und einem Grauguß für Lagerstuhl und Lagerdeckel ergibt eine sichere Trennung dieser Bauteile durch die eine metallische Verbindung verhindernde Oxidhaut der gegossenen Alu-Legierung.

## Patentansprüche

1. Verfahren zur Ausbildung einer geteilten Lageranordnung in einem gegossenen Maschinengehäuse, insbesondere Gleitlager für Hubkolbenmaschinen,
- wobei in den Spannflächen von Lagerstuhl und Lagerdeckel aus unterschiedlich harten Werkstoffen korrespondierende Profile gesondert ausgebildet werden,
dadurch gekennzeichnet,
- daß in der Gießform für das Maschinengehäuse aus einem Leichtmetall jedem gehäuseseitigen Lagerstuhl ein aus einem Eisenwerkstoff gebildeter Lagerdeckel mit einer profilierten Spannfläche derart zugeordnet wird, daß
- in der Spannfläche jedes Lagerstuhls das korrespondierende Profil zum jeweiligen, vom im wesentlichen erkalteten Maschinengehäuse entfernbaren Lagerdeckel erzeugt wird.

2. Verfahren nach Anspruch 1, dadurch gekennzeichnet, daß das Profil des Lagerdeckels mit einer dünnen Schlichteschicht zum leichteren Trennen vom Lagerstuhl versehen wird.

3. Verfahren nach Anspruch 1 oder 2, dadurch gekennzeichnet, daß der Lagerdeckel aus einem Graugußwerkstoff (GGG) gebildet wird mit einer Verzahnung als Profil in der Spannfläche.
